# EUROPÄISCHE PATENTSCHRIFT

(11) **EP 2 937 771 B1**
(45) Veröffentlichungstag und Bekanntmachung des Hinweises auf die Patenterteilung: **10.04.2019**
(21) Anmeldenummer: 14165983.9
(22) Anmeldetag: 25.04.2014
(51) Int. Cl.: G06F 3/0488, G01C 21/36

(54) **Anwenderschnittstelle für ein Infotainment-System eines Fortbewegungsmittels**
User interface for an infotainment system of a means of transport
Interface utilisateur pour un système d'info-spectacle d'un moyen de transport

(43) Veröffentlichungstag der Anmeldung: 28.10.2015
(73) Patentinhaber: Volkswagen Aktiengesellschaft, 38440 Wolfsburg (DE)
(72) Erfinder: Wild, Holger, 10179 Berlin (DE)

(56) Entgegenhaltungen:
- EP-A1- 1 195 673
- EP-A2- 1 475 693
- US-A1- 2009 183 076
- US-A1- 2012 013 548
- US-A1- 2013 241 720
- US-A1- 2013 322 634

## Beschreibung

### Stand der Technik

Die vorliegende Erfindung betrifft eine Anwenderschnittstelle für ein Infotainment-System eines Fortbewegungsmittels. Insbesondere betrifft die vorliegende Erfindung eine optimierte Aufteilung der Bildschirmansicht sowie deren Anpassung.

Die zunehmende Vielzahl unterschiedlicher Funktionsumfänge in Fortbewegungsmitteln stellen immer höhere Ansprüche an eine anwenderfreundliche Darstellung und Bedienmöglichkeit durch die verwendeten Anwenderschnittstellen. Zumindest in höherwertigen Fahrzeugen haben sich für die Darstellung mittlerweile Anzeigeeinrichtungen zur Anzeige wahrfreier Bildschirmansichten durchgesetzt, auf welchen kontextabhängige Informationen dargestellt werden können. Zur Bedienung haben sich berührungsempfindliche Oberflächen der Anzeigeeinrichtungen bewährt. Um Informationen zu unterschiedlichen Funktionsumfängen eines Fortbewegungsmittels auf einer einzigen Anzeigeeinrichtung darzustellen, sind vereinzelt sogenannte "Splitscreen-Konzepte" (geteilte Bildschirmdarstellung) bekannt. Hierbei kann ein erster Funktionsumfang auf einer ersten Teiloberfläche der Anzeigeeinrichtung und ein zweiter Funktionsumfang auf einer zweiten Teiloberfläche der Anzeigeeinrichtung dargestellt werden. In Verbindung mit berührungsempfindlichen Oberflächen haben sich Splitscreen-Konzepte jedoch bislang nicht bewährt.

US 2011/0022393 A1 offenbart eine Anwenderschnittstelle für ein Infotainment-System eines Fahrzeugs, bei welchem in einem ersten Teilbereich einer Bildschirmansicht Schaltflächen und in einem zweiten Teilbereich der Bildschirmansicht eine Liste unterschiedlicher Musiktitel zur Auswahl gestellt werden.

WO 2010/134718 A2 offenbart ein tragbares Anwenderendgerät, bei welchem unterschiedliche Homescreens bezüglich ihrer Inhalte durch einen Anwender angepasst werden können. Hierbei werden auf den Homescreens einzelne Kacheln dargestellt, welche in Abhängigkeit einer Ausrichtung des Anwenderendgerätes beziehungsweise in Abhängigkeit von Anwendereingaben ihre Position und/oder relative Anordnung ändern.

EP 1 475 693 A2 offenbart eine Computeranzeige- und -eingabeeinrichtung für Kraftfahrzeuge, in welchem ein Hauptinteraktionsbereich für die Entgegennahme von Handschrifteingaben oberhalb eines mit Bedienelementen in Form von Funktionstasten versehenen Bereiches dargestellt ist.

US 2012/0013548 A1 offenbart eine Anwenderschnittstelle für ein Fortbewegungsmittel, welche eingerichtet ist, in einem unteren Bildschirmbereich eine erste Vielzahl Anzeigeelementen und in einem darüber angeordneten Bildschirmbereich eine zweite Vielzahl Schaltflächen anzuzeigen. Die Anzeigeelemente sind in Hardware ausgestalteten Anzeigeelementen nachempfunden.

Ausgehend von dem vorgenannten Stand der Technik ist es eine Aufgabe der vorliegenden Erfindung, die Anzeige und Bedienung eines in einem Fortbewegungsmittel integrierten Infotainment-Systems ergonomischer zu gestalten.

### Offenbarung der Erfindung

Die vorstehend genannte Aufgabe wird erfindungsgemäß durch eine Anwenderschnittstelle für ein Infotainment-System eines Fortbewegungsmittels gelöst. Das Fortbewegungsmittel kann beispielsweise ein PKW, ein Transporter, ein LKW, ein Luft- und/oder Wasserfahrzeug sein. Die Anwenderschnittstelle umfasst eine Anzeigeeinrichtung, mittels welcher wahlfreie Bildschirmansichten zur Anzeige gebracht werden können. Solche Anzeigeeinrichtungen werden auch als "Matrixanzeige" bezeichnet. Zusätzlich umfasst die erfindungsgemäße Anwenderschnittstelle eine Eingabeeinrichtung, mittels welcher ein Anwender Eingaben zur Steuerung des Infotainment-Systems vornehmen kann. Zusätzlich ist eine Auswerteeinheit vorgesehen, welche als "elektronisches Steuergerät", "Mikroprozessor", "Mikrocontroller", "Nanocontroller" ausgestaltet sein kann. Die Anzeigeeinrichtung ist erfindungsgemäß eingerichtet, die Bildschirmansicht durch eine Demarkationsgrenze in einen ersten Bereich und einen zweiten Bereich aufzuteilen. Dies kann beispielsweise im Ansprechen auf eine mittels der Eingabeeinrichtung erfasste Anwendereingabe erfolgen. Der erste Bereich stellt einen Hauptinteraktionsbereich zur Anzeige und Steuerung eines ersten Funktionsumfangs des Fortbewegungsmittels dar. Mit anderen Worten werden Informationen angezeigt und Elemente (z. B. Schaltflächen) zur Einflussnahme des Anwenders auf den Funktionsumfang angezeigt. In dem zweiten Bereich wird eine erste Vielzahl von Kacheln angezeigt, welche auch als räumlich begrenzte Anzeigeeinheiten zu einem jeweiligen Funktionsumfang des Fortbewegungsmittels dienen. Solche Kacheln sind häufig hinsichtlich des in ihnen dargestellten Funktionsumfangs durch einen Anwender konfigurierbar. Zu den möglichen Funktionsumfängen wird auf die nachstehend diskutierten Ausführungsbeispiele verwiesen, ohne das weitere, in diesen dargestellte Merkmale essenziell für die
vorliegende Erfindung sind. Erfindungsgemäß wird eine Bedienung eines im Hauptinteraktionsbereich zur Anzeige gebrachten Funktionsumfangs parallel zur Darstellung völlig anderer Informationen auf den Kacheln ermöglicht. Auf diese Weise können Anwenderinteraktionen während der Bedienung des Fortbewegungsmittels reduziert werden, was die Verkehrssicherheit erheblich erhöht.

Die Unteransprüche zeigen bevorzugte Weiterbildungen der Erfindung.

Die erste Vielzahl von Kacheln kann auf dem zweiten Bereich derart angeordnet sein, wie dies durch einen den Kacheln zugeordneten Homescreen vorgegeben ist. Mit anderen Worten kann der Homescreen anteilig derart auf den zweiten Bereich dargestellt werden, dass lediglich die erste Vielzahl von Kacheln des vollständigen Homescreens erscheint, die übrigen Kacheln jedoch durch den ersten Bereich "verdeckt" werden bzw. virtuell außerhalb der Bildschirmansicht angeordnet sind. Eine veränderte Größe und/oder Detailtiefe der auf dem zweiten Bereich dargestellten Kacheln bleibe hiervon unbenommen. Beispielsweise können Erläuterungen in Textform und/oder Sinnbilder ("Icons"), welche auf dem Homescreen für die erste Vielzahl der Kacheln vorgesehen sind, anteilig oder vollständig von der Anzeige im zweiten Bereich ausgenommen sein, um deren Fläche zu verkleinern.

Entsprechendes gilt für den Hauptinteraktionsbereich auf dem ersten Bereich. Dieser kann bezüglich der Detailtiefe, der relativen Anordnung enthaltener Darstellungselemente entsprechend der ersten Vielzahl von Kacheln auf dem zweiten Bereich an eine aktuelle Gestalt und/oder Position der Demarkationsgrenze angepasst werden.

Bevorzugt wird die Demarkationsgrenze im Ansprechen auf eine mittels der Eingabeeinrichtung erkannte Anwendereingabe in ihrer Gestalt und/oder bezüglich ihrer Position verändert. Entsprechend ist es möglich, eine alternative Gewichtung der Oberflächenanteile des ersten Bereiches gegenüber dem zweiten Bereich der Bildschirmansicht vorzunehmen. Eine Vergrößerung des ersten Bereiches ermöglicht gegebenenfalls ein Mehr an Informationen zum Hauptinteraktionsbereich sowie eine komfortablere Bedienung desselben. Ein größer dargestellter zweiter Bereich ermöglicht eine größere Detailtiefe der auf den Kacheln dargestellten Informationen und/oder eine größere Anzahl dargestellter Kacheln. In Abhängigkeit der Anwenderbedürfnisse kann so eine möglichst ergonomische Darstellung und Bedienung erfolgen.

Eine bevorzugte Ausgestaltung der Demarkationsgrenze ist eine horizontale Linie, welche im Ansprechen auf eine Anwendereingabe vertikal auf der Bildschirmansicht bewegt werden kann. Entsprechend vordefinierter Vorgaben kann eine veränderte Position das Ansichtsverhältnis der auf dem ersten Bereich und dem zweiten Bereich dargestellten Inhalte nach sich ziehen. Dies ermöglicht eine bestmögliche Ausnutzung der zur Verfügung stehenden Bildschirmansicht, ohne dass der Anwender hierzu zusätzliche Schritte unternehmen muss.

Für die Anwendereingabe zur Veränderung der Demarkationsgrenze eignet sich insbesondere eine Wischgeste, welche beispielsweise unter Kontakt mit der Eingabeeinrichtung durchgeführt wird. Hierbei ist der Kontakt mit einer Eingabeeinrichtung lediglich optional zu verstehen, da mittlerweile auch frei im Raum ausgeführte Gesten (3D-Gesten) zur Steuerung von Infotainment-Systemen erfolgreich vorgesehen werden.

Insbesondere bei Vorhandensein einer Annäherungssensorik kann die Veränderung der Demarkationsgrenze ergonomisch und platzsparend erfolgen. Während die Demarkationsgrenze vor dem Erkennen einer Annäherung (z. B. der Hand eines Anwenders) nur sehr schmal oder selbst optisch überhaupt nicht dargestellt wird, kann im Ansprechen auf die erkannte Annäherung die Demarkationsgrenze optisch verstärkt oder anderweitig hervorgehoben werden. Insbesondere kann der Vorgang des optischen Hervorhebens den Anwender ermutigen, mit der Demarkationsgrenze zu interagieren. Hierzu kann beispielsweise ein Anfasser oder eine Lasche an der Demarkationsgrenze dargestellt werden oder die gesamte Demarkationsgrenze als Lasche/Anfasser ausgestaltet sein. Nach einer erfolgten Annäherung an die Anzeigeeinrichtung beziehungsweise die Eingabeeinrichtung ist der Anwender somit darüber informiert, dass er eine Anpassung der Flächenverhältnisse zwischen dem ersten Bereich und dem zweiten Bereich mittels einer Wischgeste vornehmen kann. Nach erfolgter Bedienung (nach dem Verlassen des Annäherungsbereiches) kann die Bildschirmdarstellung vereinfacht und die zur Verfügung stehende Fläche besser genutzt werden, indem die Demarkationsgrenze optisch verringert beziehungsweise gar nicht mehr dargestellt wird.

Die vorgenannten Möglichkeiten zur Veränderung/Verschiebung der Demarkationsgrenze ermöglichen insbesondere einen raschen Wechsel zwischen einer Anzeige des vollständigen Homescreens (umfassend sämtliche Kacheln des Homescreens) und einer vollständigen Ansicht des Hauptinteraktionsbereiches zu einem aktuell gewählten Funktionsumfang. Hierzu kann die Demarkationsgrenze einsprechend einem Rollo oder einer Jalousie von einem ersten Rand der Bildschirmansicht zu einem gegenüberliegenden Rand der Bildschirmansicht verschoben werden. Die Ränder können beispielsweise die vertikalen und/oder die horizontalen Grenzen einer rechteckigen Bildschirmansicht sein. Beim Verschieben der Demarkationsgrenze kann in Abhängigkeit der jeweils zur Verfügung stehenden Fläche eine erste Reihe von Kacheln zunächst vergrößert werden, bis mit zunehmender Verschiebung und zunehmend zur Verfügung stehender Fläche eine zweite (horizontale) Reihe von Kacheln auf dem zweiten Bereich Platz findet. Um auch die zweite Reihe von Kacheln auf dem zweiten Bereich unterzubringen, können die Kacheln zunächst wieder etwas verkleinert dargestellt werden, bis sich die zur Verfügung stehende Fläche erneut vergrößert hat und sich der Vorgang gegebenenfalls mit einer dritten (horizontalen) Reihe von Kacheln wiederholt. Die vorgenannte Verfahrensweise bei der Darstellung der ersten Vielzahl von Kacheln ermöglicht eine bestmögliche Ausnutzung der dem zweiten Bereich zur Verfügung stehenden Fläche der Bildschirmansicht.

Die erfindungsgemäße Splitscreen-Darstellung ermöglicht zudem eine besonders rasche und intuitive Möglichkeit zur Anpassung des im Hauptinteraktionsbereich dargestellten Funktionsumfangs. Hierzu kann mittels einer Anwenderinteraktion (z. B. eine Wischgeste, welche die Demarkationsgrenze überschreitet) ein auf einer ersten Kachel der ersten Vielzahl von Kacheln dargestellter Funktionsumfang dem Hauptinteraktionsbereich zugewiesen werden. Auf diese Weise kann der Funktionsumfang anschließend nicht lediglich dargestellt, sondern zusätzlich auch bedient werden. Ein bislang im Hauptinteraktionsbereich angezeigter Funktionsumfang kann hierbei automatisch der ersten Kachel der ersten Vielzahl von Kacheln im zweiten Bereich zugewiesen werden, sodass eine (gegebenenfalls reduzierte) optische Information weiterhin angezeigt wird, ohne dass eine direkte Bedienung des Funktionsumfangs über die erste Kachel vorgesehen sein muss. Die vorstehend beschriebene Möglichkeit, die Anwenderschnittstelle an die aktuellen Bedürfnisse des Anwenders anzupassen, verringert die Vielzahl und die Zeitdauer für die erforderlichen Bedienschritte, wodurch sich die Verkehrssicherheit bei der Bewegung des Fortbewegungsmittels erhöht.

Mittels einer zweiten Geste bezüglich eines im Hauptinteraktionsbereich aktuell dargestellten Funktionsumfangs kann der vorstehend beschriebene Austausch in umgekehrter Richtung vorgenommen werden. Hierbei wird der im Hauptinteraktionsbereich aktuell dargestellte Funktionsumfang (z. B. im Ansprechen auf eine Wischgeste, welche von dem ersten Bereich in den zweiten Bereich der Bildschirmansicht führt) auf eine durch die Geste adressierte Kachel in den zweiten Bereich gelangen, während der bislang auf der adressierten Kachel dargestellte Funktionsumfang der dem Hauptinteraktionsbereich zugewiesen wird. Sofern die vorstehend beschriebene zweite Geste eine Zielposition zwischen zwei Kacheln der ersten Vielzahl von Kacheln aufweist, kann optional eine zusätzliche Kachel erzeugt werden, welche an der Zielposition zwischen die zwei benachbarten Kacheln eingeschoben wird. Um dem Hauptinteraktionsbereich anschließend einen neuen Funktionsumfang zuzuweisen, kann der Anwender anschließend beispielsweise eine andere Kachel der ersten Vielzahl von Kacheln in den ersten Bereich der Bildschirmansicht schieben/wischen.

Der erste Bereich kann insbesondere oberhalb des zweiten Bereiches angeordnet sein. In diesem Fall weist der erste Bereich auch die im Stand der Technik übliche Statusleiste auf, in welcher Werte und/oder Symbole zu aktuellen Einstellungen der Fahrzeugfunktionen wiedergegeben werden. Auch eine Steuerleiste kann in dem ersten Bereich angeordnet sein. Diese ist üblicherweise am unteren Rand des Hauptinteraktionsbereiches angeordnet. Sie weist Schaltflächen auf, mittels welcher Funktionen des Hauptinteraktionsbereiches bedient werden können.

Im Ansprechen auf eine vordefinierte Anwendereingabe kann die Anzeigeeinrichtung eingerichtet sein, die optische Erscheinung (ein Farbschema, englisch: "colour scheme") des ersten Bereiches und/oder des zweiten Bereiches an einen Anwenderwunsch anzupassen. Eine solche Anpassung kann beispielsweise über ein hierzu vorgesehenes Einstellungsmenü vorgenommen werden. Insbesondere kann auch über einen Lichtsensor von einem "Tagmodus" in einen "Nachtmodus" gewechselt werden. Auf diese Weise wird die Anzeige ergonomisch an Vorlieben des Anwenders und Gegebenheiten der aktuellen Betriebssituation angepasst.

Gemäß einem zweiten Aspekt der vorliegenden Erfindung wird ein Fortbewegungsmittel mit einer Anwenderschnittstelle vorgeschlagen, wie sie oben im Detail beschrieben worden ist. Insbesondere können die Bestandteile der Anwenderschnittstelle fest in das Fortbewegungsmittel (z. B. ein PKW, ein Transporter, ein LKW) integriert sein. Die Merkmale, Merkmalskombinationen und die sich aus diesen ergebenden Vorteile entsprechen den in Verbindung mit dem erstgenannten Erfindungsaspekt ausgeführten derart ersichtlich, dass zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht von Komponenten eines Ausführungsbeispiels einer erfindungsgemäßen Anwenderschnittstelle in einem Ausführungsbeispiel eines erfindungsgemäßen Fortbewegungsmittels;
- Figur 2: eine schematische Darstellung einer erfindungsgemäß geteilten Bildschirmansicht;
- Figur 3 - 9: Bildschirmansichten zur Bedienung und optischen Aufteilung der Anzeige auf einem Ausführungsbeispiel einer erfindungsgemäßen Anwenderschnittstelle;
- Figur 10: eine schematische Darstellung einer alternativen Aufteilung der Bildschirmansicht gemäß einem weiteren Ausführungsbeispiel der vorliegenden Erfindung; und
- Figur 11: eine schematische Darstellung eines Homescreens nach dem Maximieren des zweiten Bereiches auf eine Anzeigeeinrichtung eines Ausführungsbeispiels der vorliegenden Erfindung.

### Ausführungsformen der Erfindung

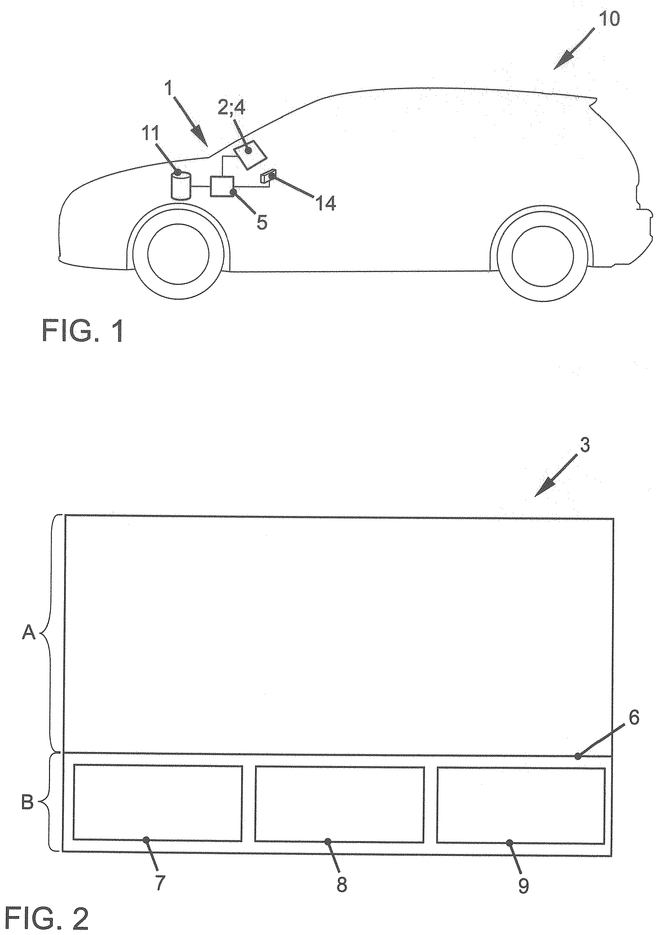

Figur 1 zeigt einen PKW 10 als Fortbewegungsmittel, in welchem eine Anwenderschnittstelle 1 umfassend einen Bildschirm 2 als Anzeigeeinrichtung, ein elektronisches Steuergerät 5 als Auswerteeinheit und einen Datenspeicher 11 eingebaut ist. Der Bildschirm 2 ist mit einer berührungsempfindlichen Oberfläche 4 als Eingabeeinrichtung versehen, mittels welcher der Anwender Wischgesten unter Kontakt mit der Oberfläche des Bildschirms 2 ausführen kann. Unterhalb des Bildschirms 2 ist eine Infrarot-LED-Leiste 14 als Annäherungssensorik vorgesehen, mittels welcher zudem 3D-Gesten zur Bedienung der Anwenderschnittstelle 1 ausgewertet werden können.

Figur 2 zeigt eine schematische Darstellung einer Bildschirmansicht 3 auf einem Bildschirm der erfindungsgemäßen Anwenderschnittstelle, welche entlang einer horizontalen Demarkationsgrenze 6 in einen oberen ersten Bereich A und einen unteren zweiten Bereich B unterteilt ist. Der obere Bereich A stellt einen Hauptinteraktionsbereich zur Anzeige und Steuerung eines ersten (nicht dargestellten) Funktionsumfangs dar. Der zweite Bereich B stellt drei Kacheln 7, 8, 9 als erste Vielzahl von Kacheln eines (nicht dargestellten) Homescreens dar. Die Kacheln 7, 8, 9 dienen im Unterschied zum Hauptinteraktionsbereich lediglich zur Anzeige von Informationen, nicht jedoch zur Bedienung der mit ihnen assoziierten Funktionsumfänge.

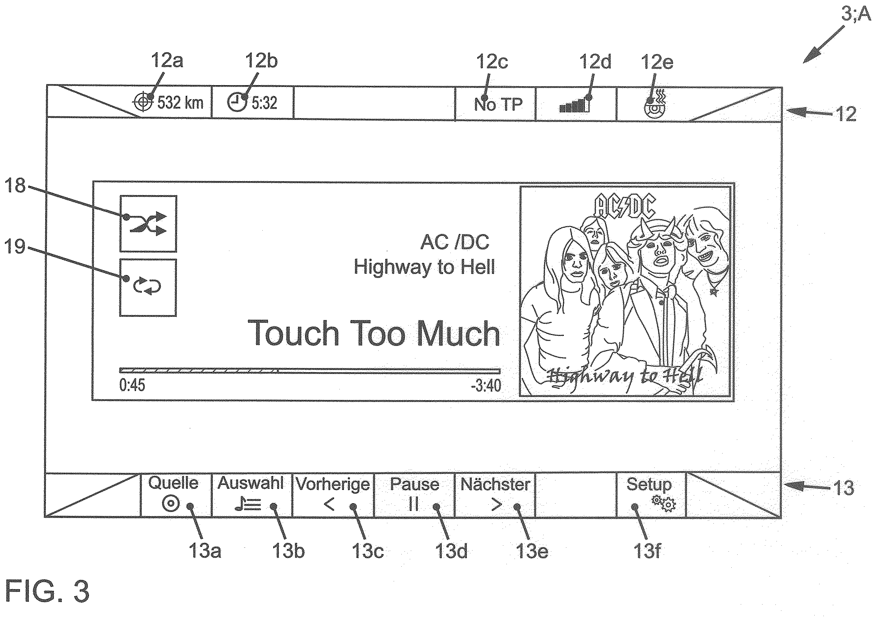

Figur 3 zeigt eine Bildschirmansicht 3 eines Ausführungsbeispiels einer erfindungsgemäßen Anwenderschnittstelle, in welcher lediglich ein erster Bereich A in Form eines Hauptinteraktionsbereiches dargestellt ist. Am oberen Rand der Bildschirmansicht 3 ist eine Statusleiste 12 angeordnet, in welcher von links nach rechts ein Symbol sowie ein Wert 12a bezüglich einer bis zum Zielort zu fahrenden Kilometerdistanz und rechts daneben ein Symbol und ein Wert 12b zur voraussichtlichen Ankunftszeit enthalten sind. Weiter rechts enthält die Statusleiste 12 Symbole 12c zur Verfügbarkeit von Verkehrsinformationen, 12d zur Veranschaulichung einer Feldstärke eines Mobilfunknetzes und 12e zum Betriebszustand einer Lenkradheizung. Darunter ist der Hauptinteraktionsbereich angeordnet, in welchem ein Tonträgercover, ein Bandname, ein Albumname und ein aktuell wiedergegebener Titel mit einem Balkendiagramm zur zeitlichen Position innerhalb des Titels dargestellt sind. Zudem ist eine Schaltfläche 18 zum Starten einer zufälligen Wiedergabe und eine Schaltfläche 19 zum Aktivieren einer wiederholten Wiedergabe im Hauptinteraktionsbereich enthalten. Am unteren Rand des ersten Bereiches A ist eine Steuerleiste 13 angeordnet, welche von links nach rechts Bezeichnungen und Sinnbilder 13a zur Quellauswahl, 13b zur Anzeige einer Titelliste, 13c zum Anwählen eines vorherigen Titels, 13d zum Anhalten der Wiedergabe, 13e zum Anwählen eines nächsten Titels und 13f zur Vornahme grundlegender Einstellungen enthalten sind. Eine erfindungsgemäß vorgesehene Demarkationsgrenze 6 ist in Figur 3 nicht dargestellt, da die (ebenfalls nicht dargestellte) Annäherungssensorik bislang kein Eingabemittel erfasst hat.

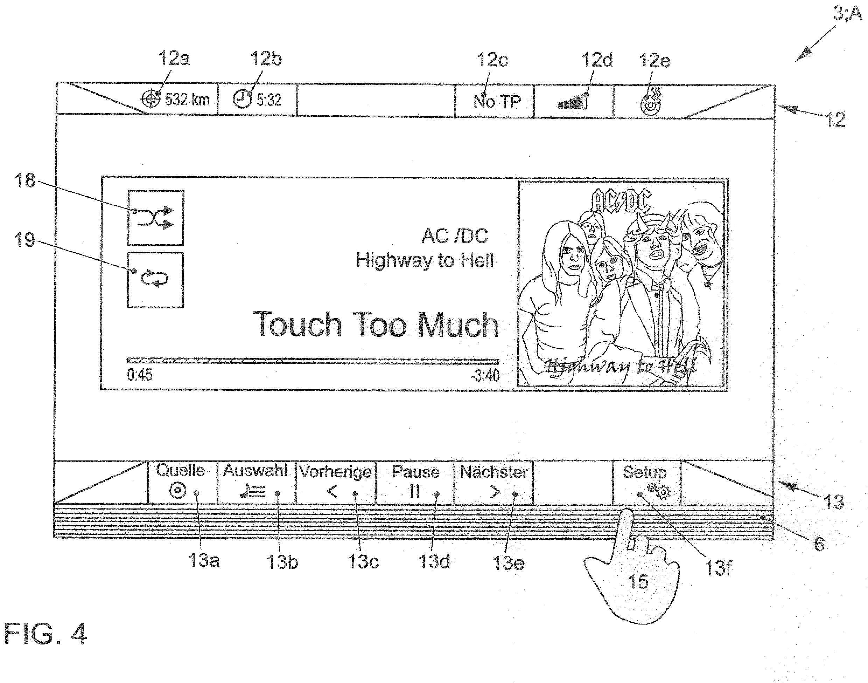

In Figur 4 nähert sich die Hand 15 eines Anwenders dem Bildschirm, im Ansprechen worauf die Demarkationsgrenze 6 in Form eines Anfassers (auch "Lasche" genannt) optisch hervorgehoben wird. Die Demarkationsgrenze 6 erscheint am untersten Rand der Bildschirmansicht 3 und wird wie nachfolgend gezeigt durch die Hand 15 des Anwenders vertikal in Richtung des oberen Randes der Bildschirmansicht 3 geschoben.

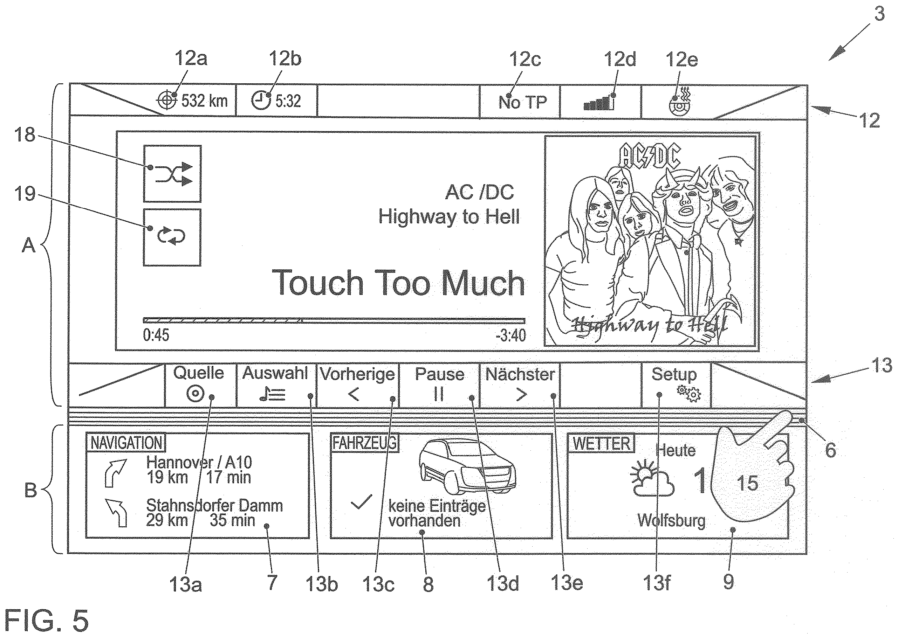

Figur 5 zeigt das Resultat des Verschiebvorgangs der Demarkationsgrenze 6, welcher in Figur 4 gestartet wurde. Im Ansprechen auf das Aufwärtsschieben der Demarkationsgrenze 6 bilden sich ein verkleinerter erster Bereich A enthaltend den Hauptinteraktionsbereich und ein unterhalb desselben angeordneter zweiter Bereich B umfassend drei Kacheln 7, 8, 9 als erste Vielzahl von Kacheln eines Homescreens aus. Während die Inhalte des Hauptinteraktionsbereiches im Wesentlichen unverändert geblieben sind, werden im zweiten Bereich B eine erste Kachel 7 zu bevorstehenden Navigationsanweisungen, auf einer zweiten Kachel 8 Informationen zu Fahrzeugfunktionen und auf einer dritten Kachel 9 Wetterinformationen dargestellt.

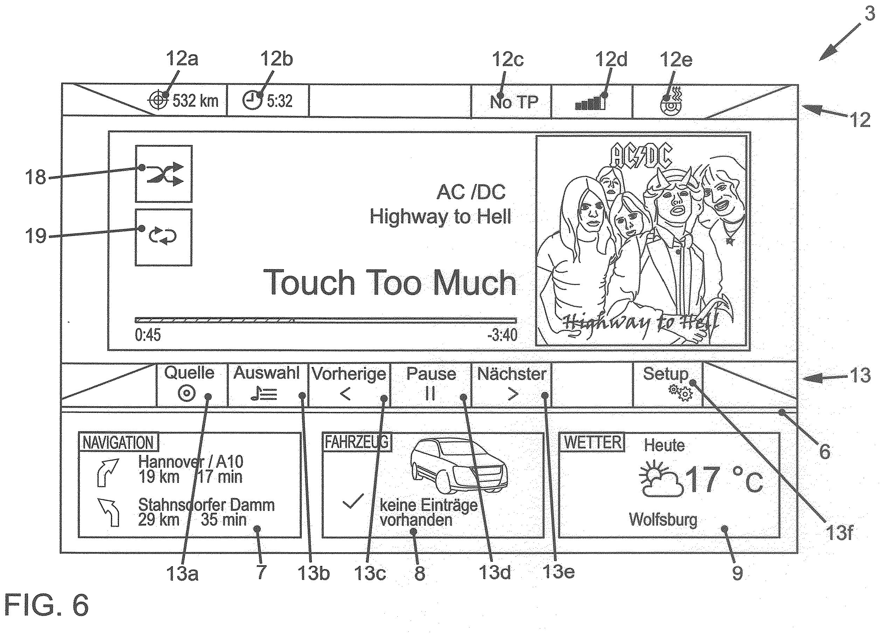

Figur 6 zeigt die in Figur 5 dargestellte Bildschirmansicht 3, nachdem die Hand 15 des Anwenders den Annäherungsbereich verlassen hat. Im Ansprechen darauf wird die Demarkationsgrenze 6 optisch reduziert dargestellt. Im Beispiel ist sie als lediglich wenige Pixel starke horizontale Linie zwischen dem ersten Bereich A und dem zweiten Bereich B ausgestaltet.

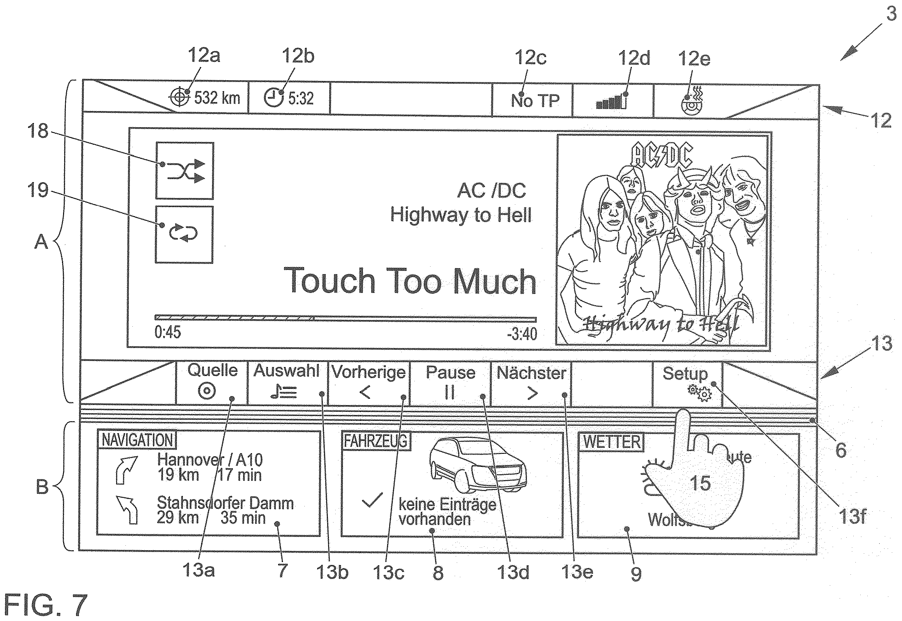

In Figur 7 hat die Hand 15 des Anwenders den Annäherungsbereich erneut erreicht, im Ansprechen worauf die Demarkationsgrenze 6 erneut als Anfasser dargestellt wird. Der Zeigefinger der Hand 15 des Anwenders verschiebt die Demarkationsgrenze 6 weiter in Richtung des oberen Randes der Bildschirmansicht 3.

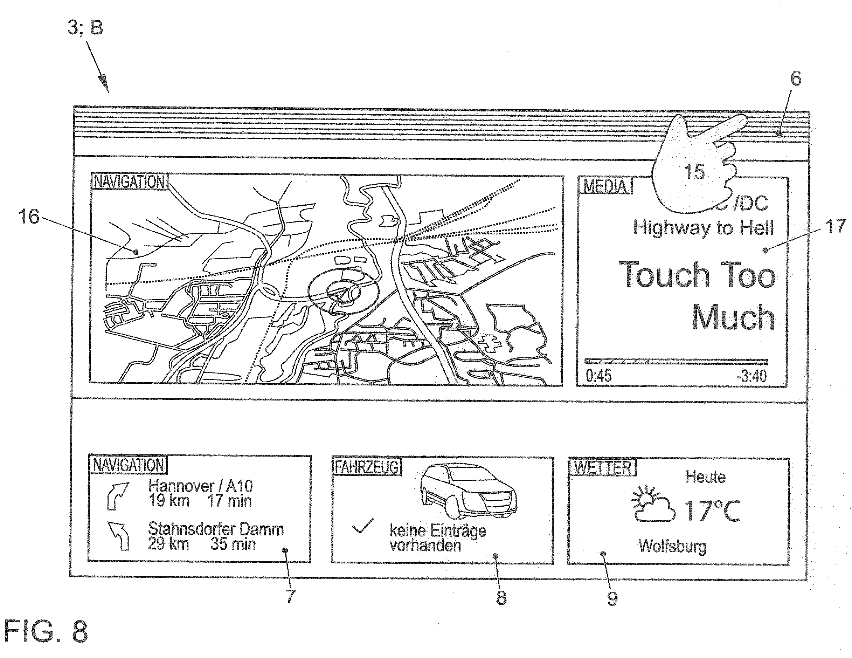

Auf diese Weise wird wie in Fig. 8 dargestellt der zweite Bereich B enthaltend fünf Kacheln 7, 8, 9, 16, 17 maximiert. Er entspricht nun im Wesentlichen einem Homescreen, auf welchem wie dargestellt mehr als die erste Vielzahl von Kacheln 7, 8, 9 dargestellt sind. Die bis in Figur 7 im Hauptinteraktionsbereich dargestellte und steuerbare Musikwiedergabe ist in Fig. 8 auf eine Kachel 17 reduziert, welche neben einer Kachel 16 mit einer Navigationsübersicht dargestellt ist.

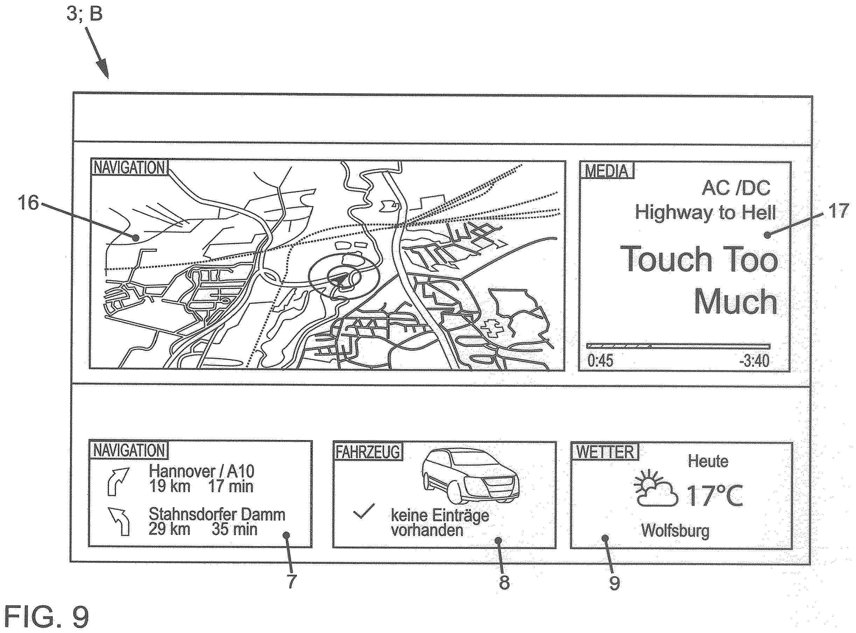

In Figur 9 hat die Hand 15 des Anwenders den Annäherungsbereich erneut verlassen, im Ansprechen worauf die Demarkationsgrenze 6 vollständig verschwindet. Der maximierte zweite Bereich B ist nun vollständig identisch mit dem Homescreen.

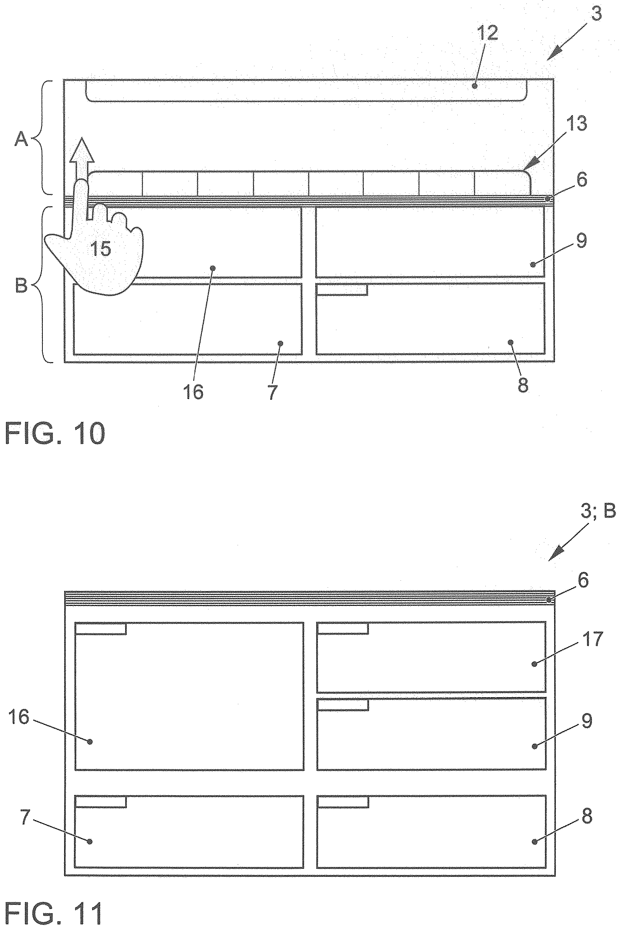

Figur 10 zeigt eine schematische Aufteilung einer Bildschirmansicht 3, in welcher unterhalb der horizontalen, als Anfasser ausgestalteten, Demarkationsgrenze 6 vier gleich große Kacheln 7, 8, 9, 16 den zweiten Bereich B füllen. Der erste Bereich A weist eine stilisierte Statusleiste 12 und eine stilisierte Steuerleiste 13 auf.

Figur 11 zeigt eine alternative Anordnung von Kacheln 7, 8, 9, 16, 17 in einem zweiten Bereich B einer Bildschirmansicht 3. Der Bereich B füllt die Bildschirmansicht 3 (bis auf die als Lasche dargestellte Demarkationsgrenze 6) vollständig aus. Im unteren Drittel des zweiten Bereiches B sind nebeneinander eine erste Kachel 7 und eine zweite Kachel 8 dargestellt. Oberhalb der ersten Kachel 7 ist eine Kachel 16 dargestellt, neben welcher zwei weitere übereinander dargestellte Kacheln 9, 17 angeordnet sind. Nach Ablauf einer vordefinierten Zeitdauer (0 s, 1 s oder größer) nach Verlassen des Annäherungsbereiches durch die Hand 15 des Anwenders verschwindet die Demarkationsgrenze 6, sodass ein vollwertiger Homescreen dargestellt wird, bis die erfindungsgemäße Anwenderschnittstelle durch eine Anwendereingabe erneut bedient wird.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: Bildschirm
- 3: Bildschirmansicht
- 4: Eingabeeinrichtung
- 5: elektronisches Steuergerät
- 6: Demarkationsgrenze
- 7, 8, 9: Kacheln
- 10: PKW
- 11: Datenspeicher
- 12: Statusleiste
- 12a, 12b: Werte der Statusleiste
- 12c, 12d, 12e: Symbole der Statusleiste
- 13: Steuerleiste
- 13a, 13b, 13c, 13d, 13e, 13f: Schaltflächen der Steuerleiste
- 14: Infrarot-LED-Leiste
- 15: Hand des Anwenders
- 16,17: Kacheln
- 18: Schaltfläche zur zufälligen Wiedergabe
- 19: Schaltfläche zur wiederholten Wiedergabe
- A: erster Bereich der Bildschirmansicht
- B:: zweiter Bereich der Bildschirmansicht

## Patentansprüche

1. Anwenderschnittstelle für ein Infotainment-System eines Fortbewegungsmittels (10) umfassend
- eine Anzeigeeinrichtung (2) zur Anzeige einer wahlfreien Bildschirmansicht (3),
- eine Eingabeeinrichtung (4) zur Entgegennahme von Anwendereingaben,
- eine Auswerteeinheit (5),
wobei die Anzeigeeinrichtung (2) eingerichtet ist, die Bildschirmansicht (3) durch eine Demarkationsgrenze (6) in einen ersten Bereich (A) und einen zweiten Bereich (B) aufzuteilen, wobei
- der erste Bereich (A) einen Hauptinteraktionsbereich zur Anzeige und Steuerung eines ersten Funktionsumfangs des Fortbewegungsmittels (10) umfasst, und
- der zweite Bereich (B) eine erste Vielzahl von Kacheln (7, 8, 9) eines Homescreens umfasst, welche Informationen zu unterschiedlichen Funktionsumfängen des Fortbewegungsmittels (10) wiedergeben,
**gekennzeichnet durch**
- eine Annäherungssensorik (14), wobei die Anzeigeeinrichtung (2) eingerichtet ist, die Demarkationsgrenze (6) im Ansprechen auf ein Signal der Annäherungssensorik (14) optisch hervorzuheben.

2. Anwenderschnittstelle nach Anspruch 1, wobei die erste Vielzahl von Kacheln (7, 8, 9) auf dem zweiten Bereich (B) in Abhängigkeit ihrer Position auf dem Homescreen ausgewählt und angeordnet ist.

3. Anwenderschnittstelle nach Anspruch 1 oder 2, wobei die erste Vielzahl von Kacheln (7, 8, 9) auf dem zweiten Bereich (B) in Abhängigkeit einer Position der Demarkationsgrenze (6) ausgewählt und angeordnet ist.

4. Anwenderschnittstelle nach einem der vorstehenden Ansprüche, wobei die Anzeigeeinrichtung (2) eingerichtet ist, die Demarkationsgrenze (6) im Ansprechen auf eine mittels der Eingabeeinrichtung (4) erkannte Anwendereingabe zu verändern.

5. Anwenderschnittstelle nach Anspruch 4, wobei die Demarkationsgrenze (6) eine horizontale Linie umfasst, und das Verändern der Demarkationsgrenze (6) eine vertikale Verschiebung umfasst.

6. Anwenderschnittstelle nach Anspruch 4 oder 5, wobei die Anwendereingabe eine Wischgeste, insbesondere unter Kontakt mit der Eingabeeinrichtung (4), ist.

7. Anwenderschnittstelle nach Anspruch 1, wobei die Anzeigeeinrichtung (2) eingerichtet ist, die Demarkationsgrenze (6) im Ansprechen auf das Signal der Annäherungssensorik (14) in Form eines Anfassers darzustellen.

8. Anwenderschnittstelle nach Anspruch 1 oder 7, wobei die Anzeigeeinrichtung (2) eingerichtet ist, die Demarkationsgrenze (6) im Ansprechen auf ein Ausbleiben des Signals der Annäherungssensorik (14) optisch nicht hervorgehoben darzustellen.

9. Anwenderschnittstelle nach einem der vorstehenden Ansprüche, wobei die erste Vielzahl von Kacheln (7, 8, 9) des Homescreens weniger Kacheln (7, 8, 9) als der Homescreen selbst umfasst.

10. Anwenderschnittstelle nach einem der vorstehenden Ansprüche, wobei die Anzeigeeinrichtung (2) eingerichtet ist,
- den Homescreen vollständig anzuzeigen, wenn die Demarkationsgrenze (6) vollständig an einem ersten Rand der Bildschirmansicht (3) angeordnet ist, und
- den Hauptinteraktionsbereich vollständig anzuzeigen, wenn die Demarkationsgrenze (6) vollständig an einem zweiten Rand der Bildschirmansicht (3) angeordnet ist.

11. Anwenderschnittstelle nach einem der vorstehenden Ansprüche, wobei die Anzeigeeinrichtung (2) eingerichtet ist, im Ansprechen auf eine vordefinierte erste Geste einen einer ersten Kachel (7, 8, 9) der ersten Vielzahl von Kacheln (7, 8, 9) zugeordneten Funktionsumfang im Hauptinteraktionsbereich darzustellen.

12. Anwenderschnittstelle nach Anspruch 11, wobei die Anzeigeeinrichtung (2) eingerichtet ist, im Ansprechen auf die vordefinierte erste Geste einen bislang im Hauptinteraktionsbereich angezeigten Funktionsumfang auf der ersten Kachel (7, 8, 9) der ersten Vielzahl von Kacheln (7, 8, 9) anzuzeigen.

13. Anwenderschnittstelle nach Anspruch 11 oder 12, wobei die erste Geste eine Tipp-Geste oder eine die Demarkationsgrenze (6) überschreitende Wisch-Geste umfasst.

14. Anwenderschnittstelle nach einem der vorstehenden Ansprüche, wobei die Anzeigeeinrichtung (2) eingerichtet ist, im Ansprechen auf eine vordefinierte zweite Geste einen im Hauptinteraktionsbereich dargestellten Funktionsumfang auf einer Kachel (7, 8, 9) der ersten Vielzahl von Kacheln (7, 8, 9) anzuzeigen.

15. Anwenderschnittstelle nach Anspruch 14, wobei die zweite Geste eine die Demarkationsgrenze (6) überschreitende Wisch-Geste umfasst, welche ihre Zielposition auf der ersten Kachel (7, 8, 9) hat.

16. Anwenderschnittstelle nach einem der vorstehenden Ansprüche, wobei die Kacheln (7, 8, 9, 16, 17) des Homescreens lediglich der Informationswiedergabe zu auf ihnen dargestellten Funktionsumfängen dienen und insbesondere keine Steuerung der auf ihr dargestellten Funktionsumfänge ermöglichen.

17. Anwenderschnittstelle nach einem der vorstehenden Ansprüche, wobei der erste Bereich (A) weiter
- eine Statusleiste (12), bestehend aus einer Wiedergabe von Werten (12a, 12b) und/oder Symbolen (12c, 12d, 12e), und/oder
- eine Steuerleiste (13) umfassend dem Funktionsumfang des Hauptinteraktionsbereiches zugeordneten Schaltflächen (13a, 13b, 13c), aufweist.

18. Anwenderschnittstelle nach einem der vorstehenden Ansprüche, wobei die Anzeigeeinrichtung (2) eingerichtet ist, die optische Erscheinung, insbesondere das Farbschema, des ersten Bereiches (A) und/oder des zweiten Bereiches (B) im Ansprechen auf eine vordefinierte Anwendereingabe anzupassen.

19. Fortbewegungsmittel umfassend eine Anwenderschnittstelle (1) nach einem der vorstehenden Ansprüche.

## Claims

1. User interface for an infotainment system of a means of locomotion (10), comprising
- a display device (2) for displaying a random screen view (3),
- an input device (4) for accepting user inputs,
- an evaluation unit (5),
wherein the display device (2) is configured to split the screen view (3) into a first area (A) and a second area (B) by means of a demarcation boundary (6), wherein
- the first area (A) comprises a main interaction area for displaying and controlling a first scope of functions of the means of locomotion (10), and
- the second area (B) comprises a multiplicity of tiles (7, 8, 9) of a home screen that reproduce information pertaining to different scopes of functions of the means of locomotion (10), **characterized by**
- an approach sensor system (14),
wherein the display device (2) is configured to visually highlight the demarcation boundary (6) in response to a signal of the approach sensor system (14).

2. User interface according to Claim 1, wherein the first multiplicity of tiles (7, 8, 9) on the second area (B) is selected and arranged on the basis of their position on the home screen.

3. User interface according to Claim 1 or 2, wherein the first multiplicity of tiles (7, 8, 9) on the second area (B) is selected and arranged on the basis of a position of the demarcation boundary (6).

4. User interface according to one of the preceding claims, wherein the display device (2) is configured to alter the demarcation boundary (6) in response to a user input detected by means of the input device (4) .

5. User interface according to Claim 4, wherein the demarcation boundary (6) comprises a horizontal line, and the altering of the demarcation boundary (6) comprises a vertical displacement.

6. User interface according to Claim 4 or 5, wherein the user input is a swipe gesture, in particular in contact with the input device (4).

7. User interface according to Claim 1, wherein the display device (2) is configured to present the demarcation boundary (6) in the form of a handle in response to the signal of the approach sensor system (14) .

8. User interface according to Claim 1 or 7, wherein the display device (2) is configured to present the demarcation boundary (6) in visually unhighlighted fashion in response to an absence of the signal of the approach sensor system (14).

9. User interface according to one of the preceding claims, wherein the first multiplicity of tiles (7, 8, 9) of the home screen comprises fewer tiles (7, 8, 9) than the home screen itself.

10. User interface according to one of the preceding claims, wherein the display device (2) is configured
- to display the home screen completely when the demarcation boundary (6) is arranged completely at a first edge of the screen view (3), and
- to display the main interaction area completely when the demarcation boundary (6) is arranged completely at a second edge of the screen view (3) .

11. User interface according to one of the preceding claims, wherein the display device (2) is configured to respond to a predefined first gesture by presenting a scope of functions associated with a first tile (7, 8, 9) of the first multiplicity of tiles (7, 8, 9) in the main interaction area.

12. User interface according to Claim 11, wherein the display device (2) is configured to respond to the predefined first gesture by displaying a scope of functions hitherto displayed in the main interaction area on the first tile (7, 8, 9) of the first multiplicity of tiles (7, 8, 9).

13. User interface according to Claim 11 or 12, wherein the first gesture comprises a tap gesture or a swipe gesture crossing the demarcation boundary (6).

14. User interface according to one of the preceding claims, wherein the display device (2) is configured to respond to a predefined second gesture by displaying a scope of functions presented in the main interaction area on a tile (7, 8, 9) of the first multiplicity of tiles (7, 8, 9).

15. User interface according to Claim 14, wherein the second gesture comprises a swipe gesture crossing the demarcation boundary (6), said swipe gesture having its target position on the first tile (7, 8, 9) .

16. User interface according to one of the preceding claims, wherein the tiles (7, 8, 9, 16, 17) of the home screen serve merely for the reproduction of information pertaining to scopes of functions presented on them and in particular do not allow control of the scopes of functions presented on them.

17. User interface according to one of the preceding claims, wherein the first area (A) further has
- a status bar (12), consisting of a reproduction of values (12a, 12b) and/or symbols (12c, 12d, 12e), and/or
- a control bar (13) comprising buttons (13a, 13b, 13c) associated with the scope of functions of the main interaction area.

18. User interface according to one of the preceding claims, wherein the display device (2) is configured to adapt the visual appearance, in particular the colour scheme, of the first area (A) and/or of the second area (B) in response to a predefined user input.

19. Means of locomotion comprising a user interface (1) according to one of the preceding claims.

## Revendications

1. Interface utilisateur pour un système d'info-divertissement d'un moyen de transport (10), comprenant
- un dispositif d'affichage (2) destiné à afficher une vue d'écran optionnelle (3),
- un dispositif d'entrée (4) destiné à recevoir des entrées utilisateur,
- une unité d'évaluation (5),
dans laquelle le dispositif d'affichage (2) est conçu pour diviser la vue d'écran (3) en une première région (A) et une seconde région (B) par une limite de démarcation (6), dans laquelle
- la première région (A) comprend une région d'interaction principale destinée à afficher et à commander une première gamme de fonctions du moyen de transport (10), et
- la seconde région (B) comprend une première pluralité de tuiles (7, 8, 9) d'un écran d'accueil représentant des informations concernant différentes gammes de fonctions du moyen de transport (10),
**caractérisé par**
- un système de capteur de proximité (14),
dans lequel le dispositif d'affichage (2) est conçu pour mettre en évidence optiquement la limite de démarcation (6) en réponse à un signal du système de capteur de proximité (14).

2. Interface utilisateur selon la revendication 1, dans laquelle la première pluralité de tuiles (7, 8, 9) est sélectionnée et disposée sur la seconde région (B) en fonction de leurs positions sur l'écran d'accueil.

3. Interface utilisateur selon la revendication 1 ou 2, dans laquelle la première pluralité de tuiles (7, 8, 9) est sélectionnée et disposée sur la seconde région (B) en fonction d'une position de la limite de démarcation (6).

4. Interface utilisateur selon l'une des revendications précédentes, dans laquelle le dispositif d'affichage (2) est conçu pour modifier la limite de démarcation (6) en réponse à une entrée utilisateur détectée au moyen du dispositif d'entrée (4).

5. Interface utilisateur selon la revendication 4, dans laquelle la limite de démarcation (6) comprend une ligne horizontale, et la modification de la limite de démarcation (6) comprend un déplacement vertical.

6. Interface utilisateur selon la revendication 4 ou 5, dans laquelle l'entrée utilisateur est un geste d'essuyage, en particulier en contact avec le dispositif d'entrée (4).

7. Interface utilisateur selon la revendication 1, dans laquelle le dispositif d'affichage (2) est conçu pour représenter sous la forme d'une poignée la limite de démarcation (6) en réponse au signal du système de capteur de proximité (14).

8. Interface utilisateur selon la revendication 1 ou 7, dans laquelle le dispositif d'affichage (2) est conçu pour ne pas mettre en évidence optiquement la limite de démarcation (6) en réponse à une absence du signal du système de capteur de proximité (14).

9. Interface utilisateur selon l'une des revendications précédentes, dans laquelle la première pluralité de tuiles (7, 8, 9) de l'écran d'accueil comprend moins de tuiles (7, 8, 9) que l'écran d'accueil lui-même.

10. Interface utilisateur selon l'une des revendications précédentes, dans laquelle le dispositif d'affichage (2) est conçu
- pour afficher entièrement l'écran d'accueil lorsque la limite de démarcation (6) est entièrement située sur un premier bord de la vue d'écran (3), et
- pour afficher entièrement la région d'interaction principale lorsque la limite de démarcation (6) est entièrement située sur un second bord de la vue d'écran (3) .

11. Interface utilisateur selon l'une des revendications précédentes, dans laquelle le dispositif d'affichage (2) est conçu pour afficher, en réponse à un premier geste prédéfini, une gamme de fonctions associée à une première tuile (7, 8, 9) de la première pluralité de tuiles (7, 8, 9) dans la région d'interaction principale.

12. Interface utilisateur selon la revendication 11, dans laquelle le dispositif d'affichage (2) est conçu pour afficher, en réponse au premier geste prédéfini, une gamme de fonctions préalablement affichée dans la région d'interaction principale sur la première tuile (7, 8, 9) de la première pluralité de tuiles (7, 8, 9).

13. Interface utilisateur selon la revendication 11 ou 12, dans laquelle le premier geste comprend un geste de pointe du doigt ou un geste d'essuyage dépassant la limite de démarcation (6).

14. Interface utilisateur selon l'une des revendications précédentes, dans laquelle le dispositif d'affichage (2) est conçu pour afficher, en réponse à un second geste prédéfini, une gamme de fonctions représentée dans la région d'interaction principale sur une tuile (7, 8, 9) de la première pluralité de tuiles (7, 8, 9).

15. Interface utilisateur selon la revendication 14, dans laquelle le second geste comprend un geste d'essuyage franchissant la limite de démarcation (6) et dont la position cible se situe sur la première tuile (7, 8, 9).

16. Interface utilisateur selon l'une des revendications précédentes, dans laquelle les tuiles (7, 8, 9, 16, 17) de l'écran d'accueil servent uniquement à reproduire des informations concernant des gammes de fonctions représentées sur celles-ci et ne permettent notamment pas de commander les gammes de fonctions représentées sur celles-ci.

17. Interface utilisateur selon l'une des revendications précédentes, dans laquelle la première région (A) comporte en outre
- une barre d'état (12) consistant en une reproduction de valeurs (12a, 12b) et/ou de symboles (12c, 12d, 12e), et/ou
- une barre de commande (13) comprenant des surfaces de commande (13a, 13b, 13c) affectées à la gamme de fonctions de la région d'interaction principale.

18. Interface utilisateur selon l'une des revendications précédentes, dans laquelle le dispositif d'affichage (2) est conçu pour adapter l'aspect optique, en particulier l'agencement des couleurs, de la première région (A) et/ou de la seconde région (B) en réponse à une entrée utilisateur prédéfinie.

19. Moyen de transport comprenant une interface utilisateur (1) selon l'une des revendications précédentes.
